# EUROPEAN PATENT SPECIFICATION

(11) **EP 2 427 469 B1**
(45) Date of publication and mention of the grant of the patent: **11.12.2013**
(21) Application number: 10718134.9
(22) Date of filing: 27.04.2010
(51) Int. Cl.: C07F 15/00

(54) **PROCESS FOR THE PREPARATION OF RUTHENIUM METATHESIS COMPLEX CATALYSTS**
VERFAHREN ZUR HERSTELLUNG VON RUTHENIUM-METATHESEKOMPLEX-KATALYSATOREN
PROCÉDÉ DE PRÉPARATION DE CATALYSEURS COMPLEXES DE MÉTATHÈSE DE RUTHÉNIUM

(30) Priority: 07.05.2009 EP 09159600
(43) Date of publication of application: 14.03.2012
(73) Proprietor: F.Hoffmann-La Roche AG, 4070 Basel (CH)
(72) Inventor: DOPPIU, Angelino, 63500 Seligenstadt (DE); KARCH, Ralf, 63801 Kleinostheim (DE); PUENTENER, Kurt, CH-4052 Basel (CH); RIVAS-NASS, Andreas, 69198 Schries (DE); SCALONE, Michelangelo, CH-4127 Birsfelden (CH); WINDE, Roland, 60599 Frankfurt (DE); WOERNER, Eileen, 63477 Maintal (DE)
(74) Representative: Rauber, Beat
(86) International application number: PCT/EP2010/055649
(87) International publication number: WO 2010/127964

(56) References cited:
- WO-A1-2005/016944
- WO-A1-2009/124853
- BRADY W T ET AL: "Intramolecular [2+2] cycloadditions of ketene iminium salts to carbon-carbon double bonds" JOURNAL OF ORGANIC CHEMISTRY, AMERICAN CHEMICAL SOCIETY, EASTON.; US LNKD- DOI:10.1021/JO00387A020, vol. 52, no. 11, 1 January 1987 (1987-01-01), pages 2216-2220, XP002526631 ISSN: 0022-3263 cited in the application

## Description

The invention relates to a novel process for the preparation of Ruthenium metathesis catalysts of the formula

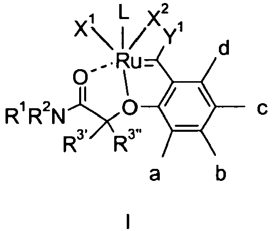

Ruthenium metathesis catalysts have been widely applied in the synthesis of macrocyclic drug compounds (see for example the PCT Publication WO 2005/037214 or PCT Publication WO 2007/015824).

It is thus important that commercially feasible pathways are available for the synthesis of these catalysts.

PCT Publication WO 2005/016944 describes a process for the preparation of ester compounds of the formula 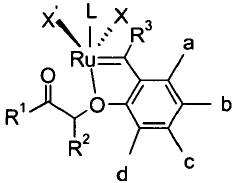 by conversion of preligands of the formula 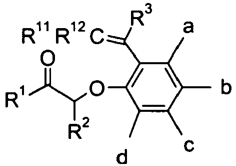 with a Ru-complex of the formula

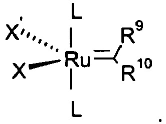

Object of the present invention therefore is to provide a technically feasible manufacturing process to the catalysts of general formula I.

The object has been achieved with the process of the present invention as outlined below.

The process for the preparation of compounds of formula I 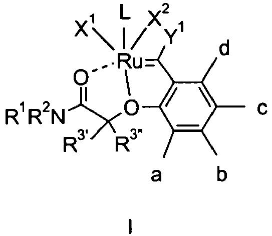 wherein the dotted line either signifies the existence of a bond or no bond;
L has the meaning of a neutral ligand selected from 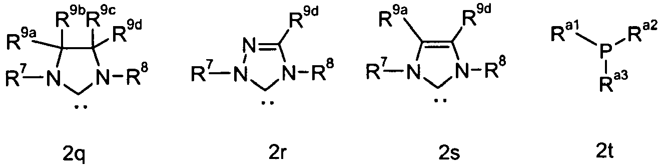 wherein R⁷ and R⁸ independently of each other are C₁₋₆-alkyl, aryl, C₂₋₆- alkenyl or 1-adamantyl and
R^{9a-d} are independently of each other hydrogen, C₁₋₆-alkyl, C₂₋₆- alkenyl or aryl, or R^{9b} and R^{9c} or R^{9a} and R^{9d} taken together form a-(CH₂)₄-bridge;
or R^{9a} and R^{9d} in formula 2s both have the meaning of halogen;
R^{a1}, R^{a2} and R^{a3} independently of each other are C₁₋₆-alkyl, C₃₋₈-cycloalkyl, aryl, heteroaryl or R^{a1} and R^{a2} or R^{a2} and R^{a3} or R^{a1} and R^{a3} taken together form a 1,5-bridged cyclooctyl group;
X¹ and X² independently of each other are anionic ligands;
Y¹ is hydrogen, C₁₋₆-alkyl, C₃₋₈-cycloalkyl, C₂₋₆-alkenyl, C₂₋₆-alkynyl, C₁₋₆-alkoxy, C₂₋₆-alkenyloxy, C₂₋₆-alkynyloxy, aryloxy, C₁₋₆-alkoxycarbonyl, C₁₋₆-alkylthio, aryl, arylthio, C₁₋₆-alkylsulfonyl, C₁₋₆-alkylsulfinyl;
a, b, c and d independently of each other have the meaning of hydrogen, C₁₋₆-alkyl, halogen-C₁₋₆-alkyl, C₂₋₆-alkenyl, C₂₋₆-alkynyl, C₁₋₆-alkoxy, C₂₋₆-alkenyloxy, C₂₋₆-alkynyloxy, C₁₋₆-alkylcarbonyl, aryl, hydroxy, aryloxy, nitro, C₁₋₆-alkoxycarbonyl, amino, mono-C₁₋₆-alkyl-or di-C₁₋₆-alkylamino, halogen, thio, C₁₋₆-alkylthio, arylthio, C₁₋₆-alkylsulfonyl, C₁₋₆-alkylsulfinyl, arylsulfonyl, SO₃H, C₁₋₆-alkylcarbonyl amino, aryl carbonyl amino, C₁₋₆-alkyl sulfonyl amino, aryl sulfonyl amino, halogen-C₁₋₆-alkyl sulfonyl amino, SO₃-C₁₋₆-alkyl or OSi(C₁₋₆-alkyl)₃ and SO₂-NR'R" wherein R' and R" independently of each other have the meaning of hydrogen, aryl or C₁₋₆-alkyl or R' and R" together with the N atom form a cycle;
R¹ and R² independently of each other are hydrogen, C₁₋₆-alkyl, C₃₋₈-cycloalkyl, aryl, aryl-C₁₋₆-alkyl or
R¹ and R² together with the N atom form a 5 to 8 member cycle which may contain nitrogen, oxygen or sulfur as additional hetero atom;
R^{3'} and R^{3"} independently of each other are hydrogen, C₁₋₆-alkyl, C₃₋₈-cycloalkyl, aryl, aryl-C₁₋₆-alkyl,
comprises the conversion of a Ru precursor compound of the formula II 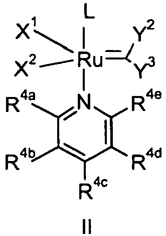 wherein X¹, X² and L are as defined above and
Y² and Y³ independently of each other are hydrogen, C₁₋₆-alkyl, C₂₋₆-alkenyl, C₂₋₆-alkynyl, C₁₋₆-alkylthio, aryl, arylthio, C₁₋₆-alkylsulfonyl, C₁₋₆-alkylsulfinyl,
or Y² and Y³ taken together form a cycle of the type 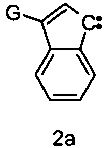 with G being hydrogen or aryl;
or
Y² and Y³ together form a cumulenyl group of the type 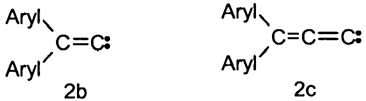 R^{4a}, R^{4b}, R^{4c}, R^{4d}, R^{4e} independently of each other are hydrogen, C₁₋₆-alkyl, C₁₋₆-alkyloxy, aryl, aryloxy, halogen, C₁₋₆-alkylcarbonyl amino or arylcarbonyl amino;
with a preligand of the formula III 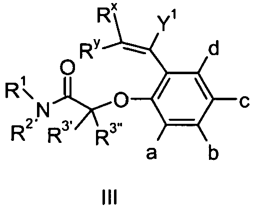 wherein R¹, R² and R^{3'} and R^{3"}, Y¹ and a,b,c,d are as defined above;
R^{x} and R^{y} independently of each denote hydrogen, C₁₋₆-alkyl optionally substituted by one or more halogen atoms or aryl optionally substituted by one or more halogen atoms or by C₁₋₆-alkyl.

The following definitions are set forth to illustrate and define the meaning and scope of the various terms used to describe the invention herein.

The term "C₁₋₆-alkyl", alone or in combination with other groups, refers to a branched or straight-chain monovalent saturated aliphatic hydrocarbon radical of one to six carbon atoms, preferably one to four carbon atoms. This term is further exemplified by radicals as methyl, ethyl, n-propyl, isopropyl, n-butyl, s-butyl, t-butyl and pentyl or hexyl and its isomers.

The term "C₂₋₆-alkenyl", alone or in combination with other groups, refers to a branched or straight-chain monovalent unsaturated aliphatic hydrocarbon radical of two to six carbon atoms, preferably two to four carbon atoms. This term is further exemplified by radicals as vinyl, propenyl, butenyl, pentenyl and hexenyl and their isomers. Preferred alkenyl radical is vinyl.

The term "C₂₋₆-alkynyl", alone or in combination with other groups, refers to a branched or straight-chain monovalent unsaturated aliphatic hydrocarbon radical of two to six carbon atoms, preferably two to four carbon atoms. This term is further exemplified by radicals as ethynyl, propynyl, butynyl, pentynyl or hexynyl their isomers.

The term "C₃₋₈-cycloalkyl" group refres to a cycloalkyl group containing from 3 to 8 carbon atoms, such as cyclopropyl, cyclobutyl, cyclopentyl, cyclohexyl, cycloheptyl or cyclooctyl.

The term "halogen-C₁₋₆-alkyl" refers to a halogen substituted C₁₋₆-alkyl radical wherein halogen has the meaning as above. Preferred "halogen-C₁₋₆-alkyl" radicals are the fluorinated C₁₋₆-alkyl radicals such as CF₃, CH₂CF₃, CH(CF₃)₂, CH(CH₃)(CF₃) or C₄F₉.

The term "C₁₋₆-alkoxy" refers to a branched or straight-chain monovalent saturated aliphatic hydrocarbon radical of one to six carbon atoms, preferably 1 to 4 carbon atoms attached to an oxygen atom. Examples of "alkoxy" are methoxy, ethoxy, propoxy, isopropoxy, butoxy, isobutoxy and hexyloxy. Preferred are the alkoxy groups specifically exemplified herein.

The alkyl chain of the alkoxy group can optionally be substituted, particularly mono-, di-or tri-substituted by alkoxy groups as defined above, preferably methoxy, or ethoxy or by aryl groups, preferably phenyl. Preferred substituted alkoxy group is the benzyloxy group.

The term "C₁₋₆-alkyl carbonyl" refers to C₁₋₆-alkyl substituted carbonyl group, preferably to a C₁₋₄-alkycarbonyl group. It includes for example acetyl, propanoyl, butanoyl or pivaloyl. Preferred alkyl carbonyl group is acetyl.

The term "C₁₋₆-alkylthio" refers to the group C₁₋₆-alkyl-S-, preferably C₁₋₄-alkyl-S-, e.g. methylthio or ethylthio. Preferred are the alkylthio groups specifically exemplified herein.

The term "arylthio" refers to a group aryl-S-, preferably to phenylthio.

The term "C₁₋₆-alkylsulfonyl" refers to a C₁₋₆-alkyl substituted sulfonyl group, preferably to methylsulfonyl.

The term "C₁₋₆-alkylsulfinyl" refers to a C₁₋₆-alkyl substituted sulfinyl group, preferably to methylsulfinyl.

The term "SO₂- aryl" refers to a sulfonyl substituted aryl radical. Preferred SO₂-aryl radical is SO₂-phenyl.

The term "SO₂-NR'R" " refers to a sulfonyl group substituted with an amino group NR'R" wherein R' and R" independently of each other have the meaning of hydrogen or C₁₋₆-alkyl or R' and R" together with the N atom form a cycle, e.g. - (CH₂)₄- or -(CH)₄-. Preferred SO₂-NR'R" radical is SO₂-N(CH₃)₂.

The term "mono- or di-C₁₋₆-alkyl-amino" refers to an amino group, which is mono- or disubstituted with C₁₋₆-alkyl, preferably C₁₋₄-alkyl. A mono-C₁₋₆-alkyl-amino group includes for example methylamino or ethylamino. The term "di-C₁₋₆-alkyl-amino" includes for example dimethylamino, diethylamino or ethylmethylamino. Preferred are the mono- or di-C₁₋₄-alkylamino groups specifically exemplified herein. It is hereby understood that the term "di-C₁₋₆-alkyl-amino" includes ring systems wherein the two alkyl groups together with the nitrogen atom to which they are attached form a 4 to 7 membered heterocycle which also may carry one further hetero atom selected from nitrogen, oxygen or sulfur.

The term "aryl", alone or in combination with other groups, relates to a phenyl or naphthyl group, which can optionally be mono-, di-, tri- or multiply-substituted by halogen, hydroxy, CN, halogen-C₁₋₆-alkyl, NO₂, NH₂, N(H,alkyl), N(alkyl)₂, carboxy, aminocarbonyl, alkyl, alkoxy, alkylcarbonyl, C₁₋₆-alkylsulfonyl, SO₂-aryl, SO₃H, SO₃-alkyl, SO₂-NR'R", aryl and/or aryloxy. Preferred aryl group usually is phenyl, however the preference for aryl may differ as indicated hereinafter for certain substituents.

The term "aryloxy" relates to an aryl radical attached to an oxygen atom. The term "aryl" has the meaning as defined above. Preferred aryloxy group is phenyloxy.

The term "arylalkyl" relates to an aryl radical attached to an alkyl group. The term "aryl" has the meaning as defined above. Preferred arylalkyl group is benzyl.

The term "aryl carbonyl " refers to an aryl radical attached to a carbonyl group, whereas the term "aryl carbonyl amino" refers to an aryl carbonyl radical attached to an amino group.

The term "halogen" refers to a fluorine, chlorine, bromine or iodine atom, preferably to a chlorine atom.

Starting compound for the process of the present invention is the Ru precursor compound of formula II 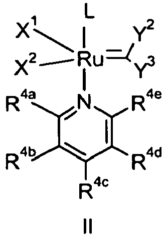 wherein X¹, X², Y², Y³, R^{4a}, R^{4b}, R^{4c}, R^{4d}, R^{4e} and L are as defined above.

The ligand L is, as outlined above a neutral ligand selected from 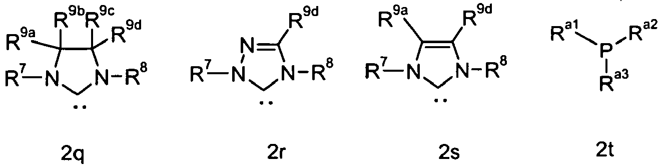 wherein R⁷ and R⁸ independently of each other are C₁₋₆-alkyl, aryl, C₂₋₆- alkenyl or 1-adamantyl and
R^{9a-d} are independently of each other hydrogen, C₁₋₆-alkyl, C₂₋₆-alkenyl or aryl, or R^{9b} and R^{9c} or R^{9a} and R^{9a} taken together form a-(CH₂)₄-bridge;
or R^{9a} and R^{9d} in formula 2s both have the meaning of halogen, preferably of chlorine;
R^{a1}, R^{a2} and R^{a3} independently of each other are C₁₋₆-alkyl, C₃₋₈-cycloalkyl, aryl, heteroaryl or R^{a1} and R^{a2} or R^{a2} and R^{a3} or R^{a1} and R^{a3} taken together form a 1,5-bridged cyclooctyl group.

In a preferred embodiment R⁷ and R⁸ are C₁₋₆-alkyl, 1-adamantyl, a phenyl group which is di- or tri-substituted with C₁₋₆-alkyl or naphthyl which is di- or tri-substituted with C₁₋₆-alkyl.

R⁷ and R⁸ more preferably have the meaning of t-butyl, 1-adamantyl, isopropyl, 2,6-diisopropylphenyl, 2,7-diisopropylnaphthyl or 2,4,6-trimethylphenyl, most preferably 2,4,6-trimethylphenyl or 2,7-diisopropylnaphthyl.

In a preferred embodiment R^{9a} and R^{9c} are methyl or phenyl and R^{9b} and R^{9d} are hydrogen, or R^{9a} and R^{9c} or R^{9b} and R^{9d} are taken together to form a -(CH₂)ₙ- bridge with n having the meaning of 5 or 6. It is hereby understood that if chiral carbon atoms are present, both the racemic and the enantiomerically pure form are comprised.

In a further preferred embodiment R^{9a-d} are hydrogen.

In a preferred embodiment R^{a1}, R^{a2} and R^{a3} independently of each other are C₁₋₆-alkyl, C₃₋₈-cycloalkyl or phenyl.

In a more preferred embodiment R^{a1}, R^{a2} and R^{a3} independently of each other stand for cyclohexyl, cyclopentyl, isopropyl and phenyl.

Suitable representatives of ligands L of formula 2t are Cy₃P, iPr₃P, Cyp₃P or Ph₃P wherein Cy stands for cyclohexyl, Cyp for cyclopentyl and iPr for isopropyl.

In a further preferred embodiment L is 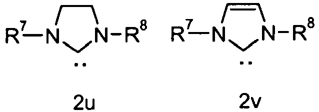 wherein R⁷ and R⁸ are as described above.

As anionic ligand X¹ and X² a halogenide or a pseudo halogenide such as cyanide, a rhodanide, a cyanate, an isocycanate, acetate or trifluoroacetate may be selected. Preferred anionic ligand for X¹ and X² is a halogenide, whereas chloro is the most preferred anionic ligand.

Y² and Y³ are preferably taken together to form a cycle of the type 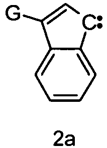 with G being hydrogen or aryl, preferably phenyl.

Preferably R^{4a}, R^{4b}, R^{4c}, R^{4d}, R^{4e} independently of each other, have the meaning of hydrogen, C₁₋₆-alkyl, and halogen, whereas hydrogen and methyl, particularly hydrogen are even more preferred.

The compounds of formula II can be prepared in accordance with the disclosure of D. Burtscher, C. Lexer, K. Mereiter, R. Winde, R. Karch, C. Slugovc, Journal of Polymer Sciences, Part A: Polymer Chemistry, 2008, 46, 4630-4635).

The most preferred compound of formula II, the compound of the formula 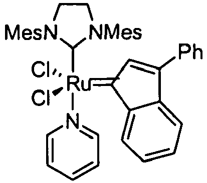 is commercially available as Neolyst M31 from Umicore AG & Co. KG, Rodenbacher Chaussee 4, 63457 Hanau-Wolfgang, Germany.

The preligands of the formula III 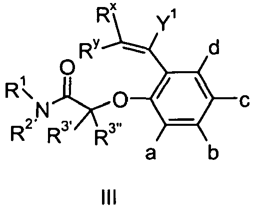 wherein R¹, R², R^{3'}, R^{3"}, Y¹ and a,b,c,d are as defined above and wherein
R^{x} and R^{y} independently of each other denote hydrogen, C₁₋₆-alkyl optionally substituted by one or more halogen atoms or aryl optionally substituted by one or more halogen atoms or by C₁₋₆-alkyl
can be prepared following the scheme below:

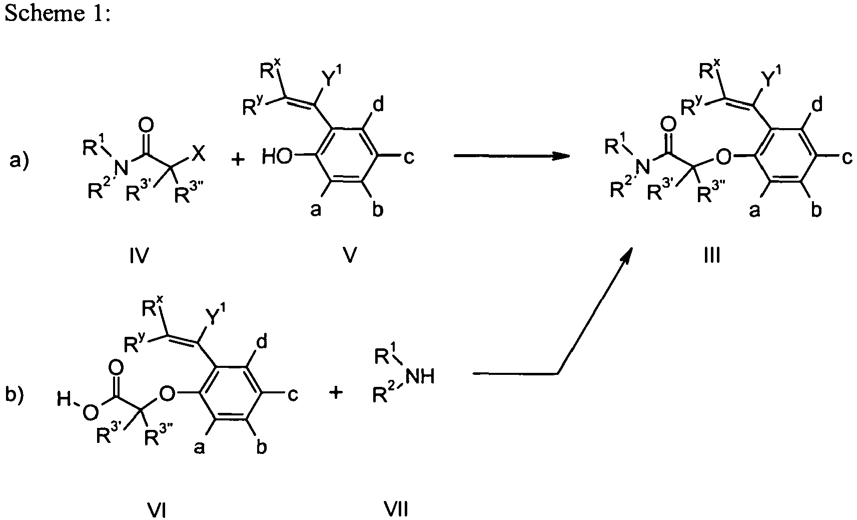

According to the pathway a) of scheme 1, the preligands of formula III can be prepared by standard methods of the organic synthesis, e.g. by treatment of the phenol building block with the 2-halo amide in DMF with potassium carbonate and cesium carbonate as bases (as reported in M. Bieniek et al, Journal of Organometallic Chemistry, 2006, 691, 5289) or in the presence of sodium hydroxide and a phase transfer agent (as reported in M. Halpern et al, Synthesis, 1979, 177).

Alternatively, according to the pathway b) of scheme 1, the preligands of formula III can be prepared by coupling of a carboxylic acid building block with an amine in the presence of a substituted tetramethyluronium salt such as TBTU (2-(1H-benzotriazol-1-yl)-1,1,3,3,-tetramethyluronium tetrafluoroborate) (G.R. Pettit et al, J. Nat. Prod. 1999, 62, 409) or HBTU (O-(1-Benzotriazolyl)-N,N,N',N'-tetramethyluronium hexafluorophosphate (A. Speicher et al, J. Prakt. Chem. 1998, 340, 581).

Preferred substituent definitions in the preligand of formula III are outlined below.

Y¹ is preferably hydrogen.

The preferred meaning of a, b and d is hydrogen.

The preferred meaning for c is hydrogen, halogen, nitro, C₁₋₆-alkylcarbonyl amino, aryl carbonyl amino, aryl sulfonyl amino, alkyl sulfonyl amino, halogen-C₁₋₆-alkyl sulfonyl amino, SO₂-NR'R" wherein R' and R" independently of each other have the meaning of hydrogen, C₁₋₆-alkyl, aryl or R' and R" together with the N atom form a cycle.

More preferably c means hydrogen, Cl, nitro or SO₂-NR'R".

In a preferred embodiment R¹ and R² independently of each other are hydrogen, C₁₋₆-alkyl or

R¹ and R² together with the N atom form a 6 member cycle which contains oxygen as additional hetero atom.

Still more preferred R¹ and R² independently of each other are hydrogen or C₁₋₆-alkyl.

R^{3'} nd R^{3"} independently of each other preferably are hydrogen or C₁₋₆-alkyl, more preferably hydrogen or methyl.

R^{x} and R^{y} independently of each other preferably are hydrogen or C₁₋₆-alkyl, more preferably hydrogen or methyl.

Preferred preligands of formula III are selected from

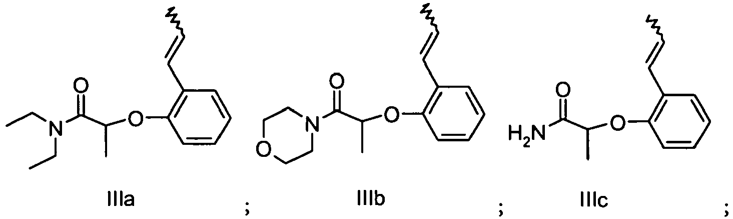

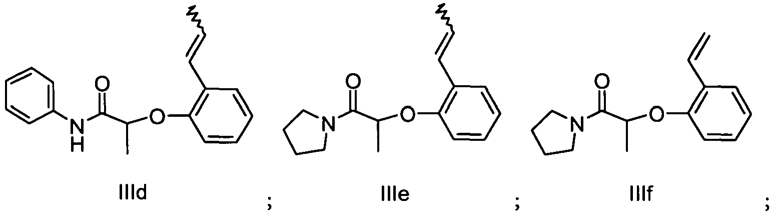

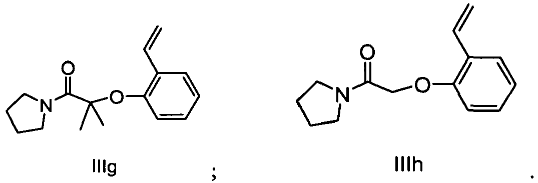

Even more preferred are the preligands of formula IIIe or IIIf.

The conversion is usually performed in an inert organic solvent such as in an aromatic solvent, a halogenated aromatic solvent, a halogenated hydrocarbon and mixtures thereof or in a mixture of said solvents with an aliphatic hydrocarbon.

Suitable aromatic organic solvents are benzene, toluene or mesitylene and suitable halogenated aromatic solvents are polyfluorinated benzenes or toluenes. Useful halogenated hydrocarbons are for example dichloromethane or dichloroethane. The solvents may be used as single solvent or as a mixture of different solvents.

Suitable aliphatic hydrocarbon co-solvents can be selected from pentane, hexane or heptane.

Preferred inert organic solvent is toluene.

The reaction can as a rule be performed at a reaction temperature of 0°C to 100°C, preferably at 40°C to 80°C, ideally under inert gas atmosphere.

The desired compound of formula I can be isolated from the reaction mixture applying methods known to the skilled in the art, usually by filtering off the product and by washing the precipitate with a suitable organic solvent such as with toluene, hexane, pentane and diethyl ether or with mixtures thereof.

The following compounds of formula I are preferred representatives of Ruthenium Metathesis Complex Catalysts which can be prepared in accordance with the present invention.

| | | |
|---|---|---|
| D | 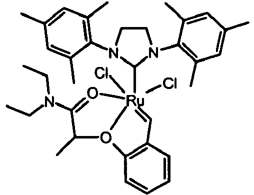 | [RuCl₂(=CH(o-OCH(Me)CONEt₂)Ph)(ImH₂Mes)] |
| E | 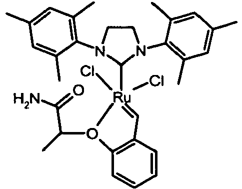 | [RuCl₂(=CH(o-OCH(Me)CONH₂)Ph)(ImH₂Mes)] |
| F | 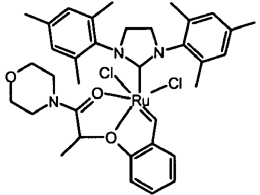 | [RuCl₂(=CH(o-OCH(Me)CO-*N* Morpholine)Ph)(ImH₂Mes)] |
| G | 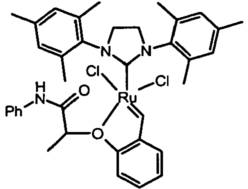 | [RuCl₂(=CH(o-OCH(Me)CONHPh)Ph)(ImH2_{M}es)] |
| J | 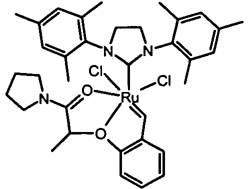 | [RuCl₂(=CH(o-OCH(Me)CO-*N* Pyrrolidine)Ph)(ImH₂Mes)] |
| K | 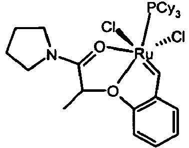 | [RuCl₂(=CH(o-OCH(Me)CO-*N* Pyrrolidine)Ph)(PCy₃)] |
| L | 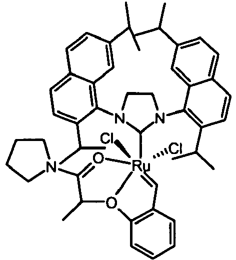 | [RuCl₂(=CH(o-OCH(Me)CO-*N* Pyrrolidine)Ph)(SIPrNap)] |
| M | 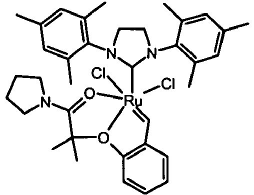 | [RuCl₂(=CH(o-OCMe₂CO-*N-*Pyrrolidine)Ph)(ImH₂Mes)] |
| N | 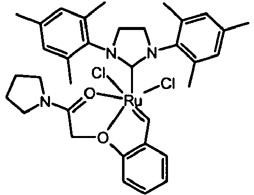 | [RuCl₂(=CH(o-OCH₂CO-*N* Pyrrolidine)Ph)(ImH₂Mes)] |

### Examples

### Abbreviations:

r.t. = room temperature
ImH₂Mes = 1,3-bis-(2,4,6-trimethylphenyl)-2-imidazolidinylidene
RP column = reverse phase column
Mes = 2,4,6-trimethylphenyl

### Preligand Example A1

### 2-[((E,Z)-2-Propenyl)-phenoxy]-propionic acid

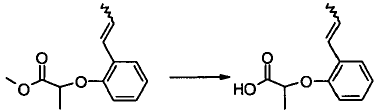

### To a solution of 0.50 g (2.2 mmol) of methyl 2-[((E,Z)-2-propenyl)-phenoxy]-propanoate

(4:1 mixture of E/Z-isomers, prepared according to D. Arlt, K. Grela et al, J. Am. Chem. Soc. 2006, 128, 13652-13653) in dioxane, 11 ml (20.0 mmol) of a 2M aqueous sodium hydroxide solution was added and the reaction mixture was stirred for 16 h at room temperature. To the reaction mixture, 50 ml of water and 100 ml of tert.-butyl methyl ether were added. The organic layer was washed with 40 ml of water. After the pH of the combined aqueous layers was adjusted with 25% aqueous hydrochloric acid to a value of 1, 150 ml of dichloromethane was added. The organic layer was washed with 100 ml of brine, dried over sodium and evaporated to dryness at 40°C/10 mbar to yield 0.50 g (99% yield) of the title compound as a 3:1 mixture of *E*/*Z*-isomers with >99.9% purity (GC-area%) as white crystals. (GC method as described in Example 7. Retention times: Methyl 2-[((*Z*)-2-propenyl)-phenoxy]-propanoate 12.2 min, methyl 2-[((*E*)-2-propenyl)-phenoxy]-propanoate 12.9 min, 2-[((*Z*)-2-propenyl)-phenoxy]-propionic acid 13.3 min, 2-[((*E*)-2-propenyl)-phenoxy]-propionic acid 14.0 min).
Mp.: 96°C. MS: 206.0 (M⁺).

### Preligand Example A2

### 2-[((E,Z)-2-Propenyl)-phenoxy]-phenoxy]-1-pyrrolidine-1-yl-propan-1-one

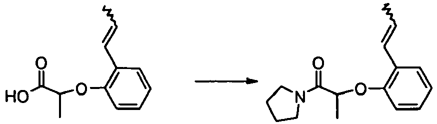

To a solution 1.92 ml (23.0 mmol) of pyrrolidine in 200 ml of *N,N-*dimethylformamide, 4.02 ml (23.0 mmol) of *N,N-*diisopropylethylamine, 1.00 g (4.6 mmol) of 2-[((*E,Z*)-2-propenyl)-phenoxy]-propionic acid (3:1 mixture of *E*/*Z*-isomers) and 1.92 g (5.8 mmol) of *O*-benzotriazol-1-yl-*N,N,N',N'-*tetramethyluronium tetrafluoroborate (TBTU) was added and the reaction mixture stirred for 2 h at room temperature. To the reaction mixture 200 ml of water and 400 ml ethyl acetate were added. The organic layer was separated, washed with 100 ml of water, dried over sodium sulfate and evaporated to dryness at 40°C/10 mbar. The crude title product was purified by silica gel chromatography (heptane/ethyl acetate 3:1) to yield 0.69 g (57% yield) of the title compound as a 4:1 mixture of *E*/*Z*-isomers with 98.1 % purity (GC-area%) as a white powder. (GC method: Column HP-5, 5% phenyl methyl siloxane, 30 m x 0.32 mm, df: 0.25 µm; injector temp.: 250°C; detector temp.: 250°C; oven temp.: 50°C to 300° (10°C/min), then 300 °C for 5 min ;Retention times: 2-[((Z)-2-propenyl)-phenoxy]-propanoic acid 13.9 min, 2-[((*E*)-2-propenyl)-phenoxy]-propanoic acid 14.0 min, 2-[((*Z*)-2-propenyl)-phenoxy]-1-pyrrolidine-1-yl-propan-1-one 18.0 min, 2-[((*E*)-2-propenyl)-phenoxy]-1-pyrrolidine-1-yl-propan-1-one 18.4 min).
MS: 260.0 (M+H⁺).

### Preligand Example B

### 1-Pyrrolidin-1-yl-2-(2-vinylphenoxy)-propan-1-one

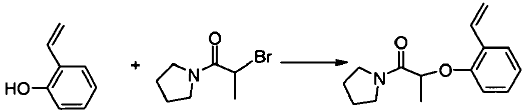

To a solution of 6.35 g (40.1 mmol) potassium 2-vinylphenolate in 110 ml of water (pH adjusted at 14 by addition of KOH) was added under argon 150 ml of toluene, 0.65 g (2.0 mmol) of tetrabutylammonium bromide and 11.54 g (50.16 mmol) of 2-bromo-1-pyrrolidin-1-yl-propan-1-one. The two-phase mixture was stirred vigorously over night at 45°C. After this time the organic phase was removed, washed with water, 4 M sodium hydroxide aqueous solution, 1 M hydrochloric acid solution and water, dried (sodium sulfate) and evaporated to dryness. Crystallization of the residue from warm heptane (200 ml) afforded the title compound as a white powder (7.0 g, 70.5% yield) with melting point of 85-86°C.
MS: 246.1496 (M+H)⁺, 268.1317 (M+Na)⁺.

### Example 1

### Catalyst No. J, [RuCl₂(=CH(o-OCH(Me)CO-N-Pyrrolidine)Ph)(ImH₂Mes)]

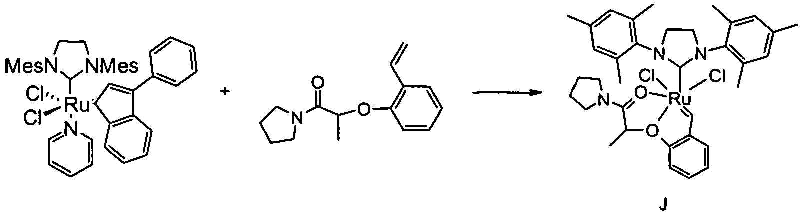

A mixture of 21.0 g (27.69 mmol) of [RuCl₂(3-phenylidenyl-1-iden)(ImH₂Mes)(pyridine)] and 7.48 g (30.46 mmol) of 1-pyrrolidin-1-yl-2-(2-vinylphenoxy)-propan-1-one in 230 ml of toluene was stirred for 2 h at 65°C under argon. The reaction mixture (a suspension) was cooled with an icebath, the precipitate was filtered off and washed with an ice-cold mixture of toluene, hexane and diethylether. The filter cake was dried at room temperature in vacuo for 20 h to afford 17.8 g of the title compound (90.6% yield) as a green powder.
Anal. calcd. for C₃₅H₄₃Cl₂N₃O₂Ru: C, 59.23; H, 6.11; N, 5.92, Cl 9.99. Found: C, 59.63; H, 6.52; N, 5.70. Ru content: 14.03%. 1H-NMR (CD₂Cl₂): characteristic signal at 16.5 ppm (Ru=C*H*).

### Example 2

### Catalyst No. J, [RuCl₂(=CH(o-OCH(Me)CO-N-Pyrrolidine)Ph)(ImH₂Mes)]

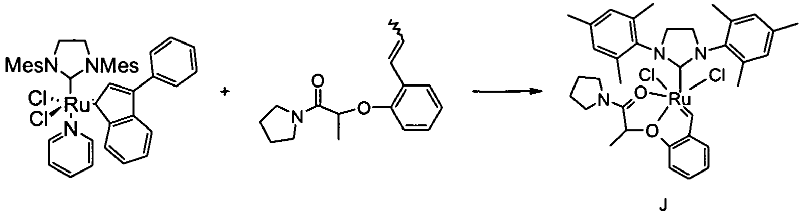

A mixture of 3.00 g (3.96 mmol) of [RuCl₂(3-phenylidenyl-1-iden)(ImH₂Mes)(pyridine)] and 1.16 g (4.35 mmol) of 2-[((*E,Z*)-2-propenyl)-phenoxy]-1-pyrrolidine-1-yl-propan-1-one in 50 ml of toluene was stirred for 4 h at 60°C under argon. The reaction mixture (a suspension) was cooled with an icebath, the precipitate was filtered off and washed with an ice-cold mixture of toluene, pentane and diethylether. The filter cake was dried at room temperature in vacuo for 20 h to afford 2.38 g of the title compound (84.8% yield) as a green powder.
Anal. calcd. for C₃₅H₄₃Cl₂N₃O₂Ru: C, 59.23; H, 6.11; N, 5.92, Cl 9.99. Found: C, 60.12; H, 6.06; N, 5.52. Ru content: 14.50%. 1 H-NMR (CD₂Cl₂): characteristic signal at 16.5 ppm (Ru=C*H*).

## Claims

1. Process for the preparation of compounds of formula I 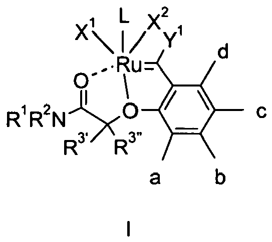 wherein the dotted line either signifies the existence of a bond or no bond;
L has the meaning of a neutral ligand selected from 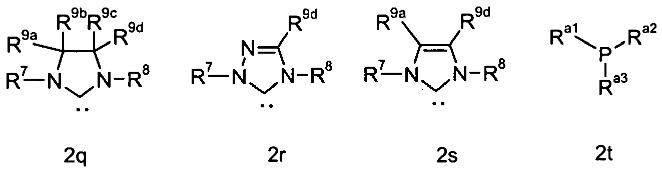 wherein R⁷ and R⁸ independently of each other are C₁₋₆-alkyl, aryl, C₂₋₆- alkenyl or 1-adamantyl and
R^{9a-d} are independently of each other hydrogen, C₁₋₆-alkyl, C₂₋₆- alkenyl or aryl, or R^{9b} and R^{9c} or R^{9a} and R^{9d} taken together form a-(CH₂)₄-bridge;
or R^{9a} and R^{9d} in formula 2s both have the meaning of halogen;
R^{4c}, R^{a2} and R^{a2} independently of each other are C₁₋₆-alkyl, C₃₋₈-cycloalkyl, aryl, heteroaryl or R^{a1} and R^{a2} or R^{a2} and R^{a3} or R^{a1} and R^{a3} taken together form a 1,5-bridged cyclooctyl group;
X¹ and X² independently of each other are anionic ligands;
Y¹ is hydrogen, C₁₋₆-alkyl, C₃₋₈-cycloalkyl, C₂₋₆-alkenyl, C₂₋₆-alkynyl, C₁₋₆-alkoxy, C₂₋₆-alkenyloxy, C₂₋₆-alkynyloxy, aryloxy, C₁₋₆-alkoxycarbonyl, C₁₋₆-alkylthio, aryl, arylthio, C₁₋₆-alkylsulfonyl, C₁₋₆-alkylsulfinyl;
a, b, c and d independently of each other have the meaning of hydrogen, C₁₋₆-alkyl, halogen-C₁₋₆-alkyl, C₂₋₆-alkenyl, C₂₋₆-alkynyl, C₁₋₆-alkoxy, C₂₋₆-alkenyloxy, C₂₋₆-alkynyloxy, C₁₋₆-alkylcarbonyl, aryl, hydroxy, aryloxy, nitro, C₁₋₆-alkoxycarbonyl, amino, mono-C₁₋₆-alkyl-or di-C₁₋₆-alkylamino, halogen, thio, C₁₋₆-alkylthio, arylthio, C₁₋₆-alkylsulfonyl, C₁₋₆-alkylsulfinyl, arylsulfonyl, SO₃H, C₁₋₆-alkylcarbonyl amino, aryl carbonyl amino, C₁₋₆-alkyl sulfonyl amino, aryl sulfonyl amino, halogen-C₁₋₆-alkyl sulfonyl amino, SO₃-C₁₋₆-alkyl or OSi(C₁₋₆-alkyl)₃ and SO₂-NR'R" wherein R' and R" independently of each other have the meaning of hydrogen, aryl or C₁₋₆-alkyl or R' and R" together with the N atom form a cycle;
R¹ and R² independently of each other are hydrogen, C₁₋₆-alkyl, C₃₋₈-cycloalkyl, aryl, aryl-C₁₋₆-alkyl or
R¹ and R² together with the N atom form a 5 to 8 member cycle which may contain nitrogen, oxygen or sulfur as additional hetero atom;
R^{3'} and R^{3"} independently of each other are hydrogen, C₁₋₆-alkyl, C₃₋₈-cycloalkyl, aryl, aryl-C₁₋₆-alkyl,
comprising the conversion of a Ru precursor compound of the formula II 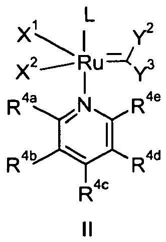 wherein X¹, X² and L are as defined above and
Y² and Y³ independently of each other are hydrogen, C₁₋₆-alkyl, C₂₋₆-alkenyl, C₂₋₆-alkynyl, C₁₋₆-alkylthio, aryl, arylthio, C₁₋₆-alkylsulfonyl, C₁₋₆-alkylsulfinyl,
or Y² and Y³ taken together form a cycle of the type 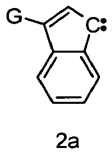 with G being hydrogen or aryl;
or
Y² and Y³ together form a cumulenyl group of the type 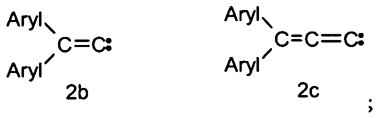 R^{4a}, R^{4b}, R^{4c}, R^{4d}, R^{4e} independently of each other are hydrogen, C₁₋₆-alkyl, C₁₋₆-alkyloxy, aryl, aryloxy, halogen, C₁₋₆-alkylcarbonyl amino or arylcarbonyl amino;
with a preligand of the formula III 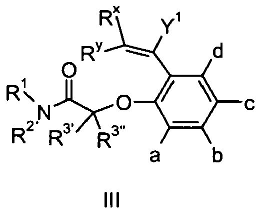 wherein R¹, R², R^{3'}, R^{3"}, Y¹ and a,b,c,d are as defined above;
R^{x} and R^{y} independently of each other denote hydrogen, C₁₋₆-alkyl optionally substituted by one or more halogen atoms or aryl optionally substituted by one or more halogen atoms or by C₁₋₆-alkyl.

2. Process of claim 1, **characterized in that** Y² and Y³ in the Ru precursor compound of the formula II are preferably taken together to form a cycle of the type 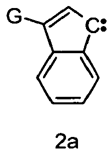 with G being hydrogen or aryl.

3. Process of claim 1, **characterized in that** X¹ and X² in the Ru precursor compound of the formula II stand for a halogenide or a pseudo halogenide.

4. Process of claim 1, **characterized in that** R^{4a}, R^{4b}, R^{4c}, R^{4d}, R^{4e} stand for hydrogen, methyl or for a halogen atom.

5. Process of claim 1, **characterized in that** the preligands of formula III are selected from

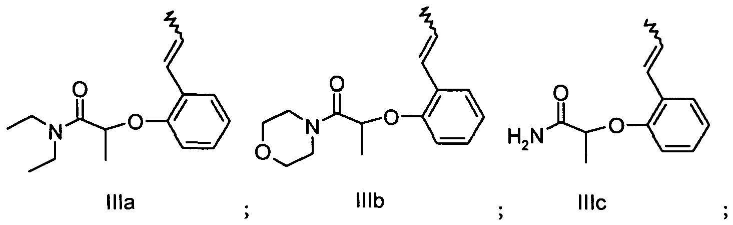

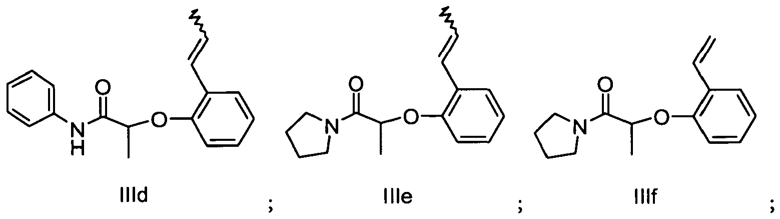

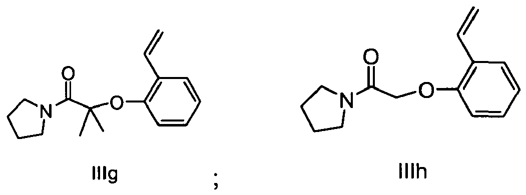

6. Process of claims 1 to 5, **characterized in that** the conversion is performed in an inert organic solvent at a temperature of 0°C to 100°C.

7. Process of claim 6, **characterized in that** the inert organic solvent is an aromatic solvent, a halogenated aromatic solvent, a halogenated hydrocarbon and mixtures thereof or a mixture of said solvents with an aliphatic hydrocarbon.

8. Process of claim 1, **characterized in that** the compounds of formula I are selected from
| | |
|---|---|
| 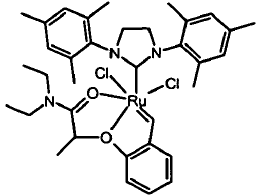 | [RuCl₂(=CH(o-OCH(Me)CONEt₂)Ph)(ImH₂Mes)] |
| 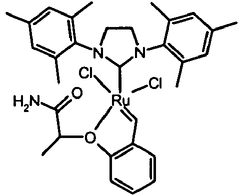 | [RuCl₂(=CH(o-OCH(Me)CONH₂)Ph)(ImH₂Mes)] |
| 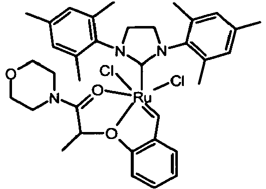 | [RuCl₂(=CH(o-OCH(Me)CO-*N* Morpholine)Ph)(ImH₂Mes)] |
| 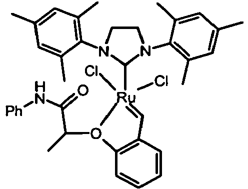 | [RuCl₂(=CH(o-OCH(Me)CONHPh)Ph)(ImH2_{M}es)] |
| 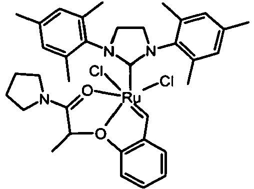 | [RuCl₂(=CH(o-OCH(Me)CO-*N-*Pyrrolidine)Ph)(ImH₂Mes)] |
| 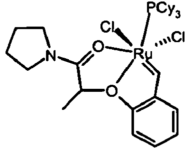 | [RuCl₂(=CH(o-OCH(Me)CO-*N-*Pyrrolidine)Ph)(PCy₃)] |
| 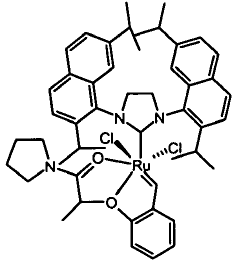 | [RuCl₂(=CH(o-OCH(Me)CO-*N* Pyrrolidine)Ph)(SIPrNap)] |
| 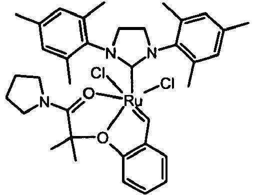 | [RuCl₂(=CH(o-OCMe₂CO-*N-*Pyrrolidine)Ph)(ImH₂Mes)] |
| 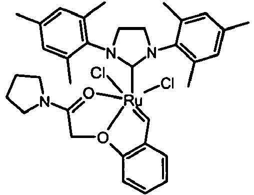 | [RuCl₂(=CH(o-OCH₂CO-*N-*Pyrrolidine)Ph)(ImH₂Mes)] |

## Patentansprüche

1. Verfahren zur Herstellung von Verbindungen der Formel I 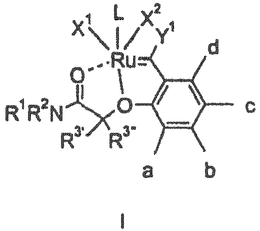 wobei die gepunktete Linie entweder das Vorhandensein einer Bindung oder keine Bindung bedeutet;
L die Bedeutung eines neutralen Liganden, ausgewählt aus 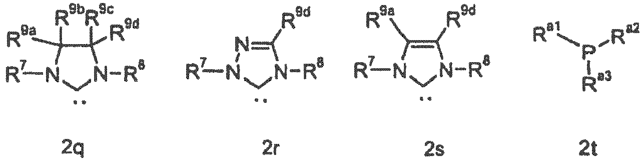 hat, wobei R⁷ und R⁸ unabhängig voneinander C₁₋₆-Alkyl, Aryl, C₂₋₆-Alkenyl oder 1-Adamantyl sind und
R^{9a-d} unabhängig voneinander Wasserstoff, C₁₋₆-Alkyl, C₂₋₆-Alkenyl oder Aryl sind oder R^{9b} und R^{9c} oder R^{9a} und R^{9d} zusammengenommen eine -(CH₂)₄-Brücke bilden;
oder R^{9a} und R^{9d} in Formel 2s beide die Bedeutung Halogen haben;
R^{a1}, R^{a2} und R^{a3} unabhängig voneinander C₁₋₆-Alkyl, C₃₋₈-Cycloalkyl, Aryl, Heteroaryl sind oder R^{a1} und R^{a2} oder R^{a2} und R^{a3} oder R^{a1} und R^{a3} zusammengenommen einen 1,5-verbrückten Cyclooctylrest bilden;
X¹ und X² unabhängig voneinander anionische Liganden sind;
Y¹ Wasserstoff, C₁₋₆-Alkyl, C₃₋₈-Cycloalkyl, C₂₋₆-Alkenyl, C₂₋₆-Alkinyl, C₁₋₆-Alkoxy, C₂₋₆-Alkenyloxy, C₂₋₆-Alkinyloxy, Aryloxy, C₁₋₆-Alkoxycarbonyl, C₁₋₆-Alkylthio, Aryl, Arylthio, C₁₋₆-Alkylsulfonyl, C₁₋₆-Alkylsulfinyl ist;
a, b, c und d unabhängig voneinander die Bedeutung Wasserstoff, C₁₋₆-Alkyl, Halogen-C₁₋₆-alkyl, C₂₋₆-Alkenyl, C₂₋₆-Alkinyl, C₁₋₆-Alkoxy, C₂₋₆-Alkenyloxy, C₂₋₆-Alkinyloxy, C₁₋₆-Alkylcarbonyl, Aryl, Hydroxy, Aryloxy, Nitro, C₁₋₆-Alkoxycarbonyl, Amino, Mono-C₁₋₆-alkyl- oder Di-C₁₋₆-alkylamino, Halogen, Thio, C₁₋₆-Alkylthio, Arylthio, C₁₋₆-Alkylsulfonyl, C₁-₆-Alkylsulfinyl, Arylsulfonyl, SO₃H, C₁₋₆-Alkylcarbonylamino, Arylcarbonylamino, C₁₋₆-Alkylsulfonylamino, Arylsulfonylamino, Halogen-C₁₋₆-alkylsulfonylamino, SO₃-C₁₋₆-Alkyl oder OSi(C₁₋₆-Alkyl)₃ und SO₂-NR'R" haben, wobei R' und R" unabhängig voneinander die Bedeutung Wasserstoff, Aryl oder C₁₋₆-Alkyl haben oder R' und R" zusammen mit dem N-Atom einen Ring bilden;
R¹ und R² unabhängig voneinander Wasserstoff, C₁₋₆-Alkyl, C₃₋₈-Cycloalkyl, Aryl, Aryl-C₁₋₆-alkyl sind oder
R¹ und R² zusammen mit dem N-Atom einen 5- bis 8-gliedrigen Ring bilden, der Stickstoff, Sauerstoff oder Schwefel als zusätzliches Heteratom enthalten kann;
R^{3'} und R^{3"} unabhängig voneinander Wasserstoff, C₁₋₆-Alkyl, C₃₋₈-Cycloalkyl, Aryl, Aryl-C₁₋₆-alkyl sind,
umfassend das Umwandeln einer Ru-Vorläuferverbindung der Formel II 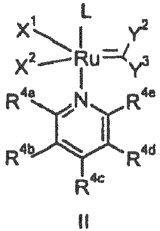 wobei X¹, X² und L wie vorstehend definiert sind und
Y² und Y³ unabhängig voneinander Wasserstoff, C₁₋₆-Alkyl, C₂₋₆-Alkenyl, C₂₋₆-Alkinyl, C₁₋₆-Alkylthio, Aryl, Arylthio, C₁₋₆-Alkylsulfonyl, C₁₋₆-Alkylsulfinyl sind,
oder Y² und Y³ zusammengenommen einen Ring des Typs 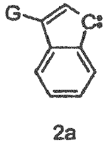 bilden,
wobei G Wasserstoff oder Aryl ist;
oder
Y² und Y³ zusammen einen Cumulenylrest des Typs 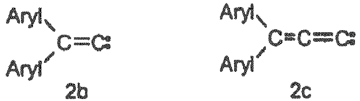 bilden;
R^{4a}, R^{4b}, R^{4c}, R^{4d}, R^{4e} unabhängig voneinander Wasserstoff, C₁₋₆-Alkyl, C₁₋₆-Alkyloxy, Aryl, Aryloxy, Halogen, C₁₋₆-Alkylcarbonylamino oder Arylcarbonylamino sind;
mit einem Präliganden der Formel III 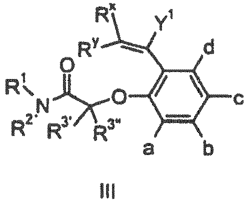 wobei R¹, R², R^{3'}, R^{3"}, Y¹ und a, b, c, d wie vorstehend definiert sind;
R^{x} und R^{y} unabhängig voneinander Wasserstoff, C₁₋₆-Alkyl, gegebenenfalls substituiert mit einem oder mehreren Halogenatomen, oder Aryl, gegebenenfalls substituiert mit einem oder mehreren Halogenatomen oder mit C₁₋₆-Alkyl, bezeichnen.

2. Verfahren nach Anspruch 1, **dadurch gekennzeichnet, dass** Y² und Y³ in der Ru-Vorläuferverbindung der Formel II vorzugsweise zusammengenommen sind, um einen Ring des Typs 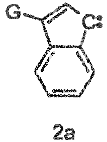 zu bilden,
wobei G Wasserstoff oder Aryl ist.

3. Verfahren nach Anspruch 1, **dadurch gekennzeichnet, dass** X¹ und X² in der Ru-Vorläuferverbindung der Formel II für ein Halogenid oder ein Pseudohalogenid stehen.

4. Verfahren nach Anspruch 1, **dadurch gekennzeichnet, dass** R^{4a}, R^{4b}, R^{4c}, R^{4d} R^{4c} für Wasserstoff, Methyl oder für ein Halogenatom stehen.

5. Verfahren nach Anspruch 1, **dadurch gekennzeichnet, dass** die Präliganden der Formel III ausgewählt sind aus

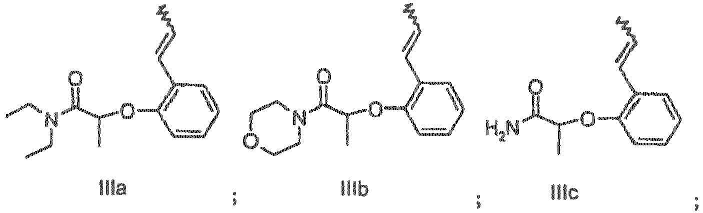

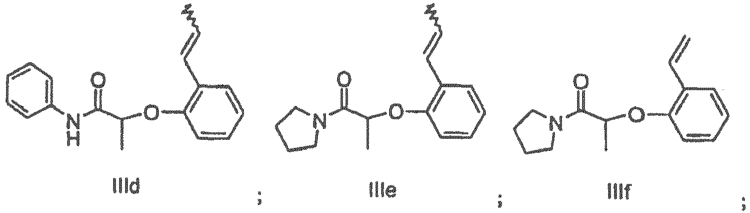

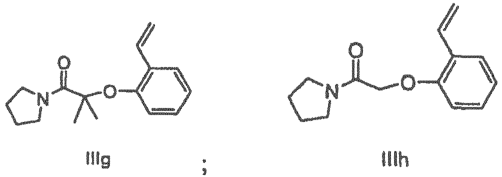

6. Verfahren nach den Ansprüchen 1 bis 5, **dadurch gekennzeichnet, dass** die Umwandlung in einem inerten organischen Lösungsmittel bei einer Temperatur von 0°C bis 100°C durchgeführt wird.

7. Verfahren nach Anspruch 6, **dadurch gekennzeichnet, dass** das inerte organische Lösungsmittel ein aromatisches Lösungsmittel, ein halogeniertes aromatisches Lösungsmittel, ein halogenierter Kohlenwasserstoff und Gemische davon oder ein Gemisch der Lösungsmittel mit einem aliphatischen Kohlenwasserstoff ist.

8. Verfahren nach Anspruch 1, **dadurch gekennzeichnet, dass** die Verbindungen der Formel I ausgewählt sind aus
| | |
|---|---|
| 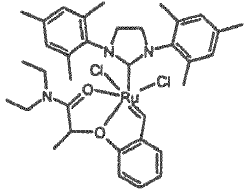 | [RuCl₂(=CH(o-OCH(Me)CONEt₂)Ph)(ImH₂Mes)] |
| 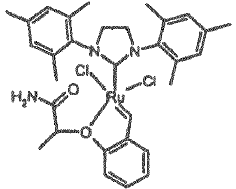 | [RuCl₂(=CH(o-OCH(Me)CONH₂)Ph)(ImH₂Mes)] |
| 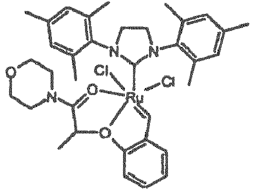 | [RuCl₂(=CH(o-OCH(Me)CO-*N* Morpholin)Ph)(ImH₂Mes)] |
| 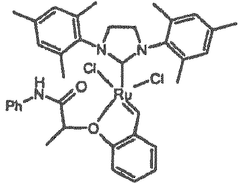 | [RuCl₂(=CH(o-OCH(Me)CONHPh)Ph)(ImH2_{M}es)] |
| 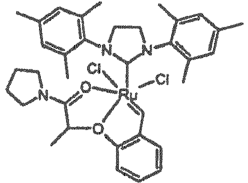 | [RuCl₂(=CH(o-OCH(Me)CO-*N-*Pyrrolidin)Ph)(ImH₂Mes)] |
| 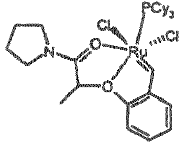 | [RuCl₂(=CH(o-OCH(Me)CO-*N-*Pyrrolidin)Ph)(PCy₃)] |
| 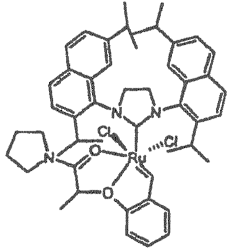 | [RuCl₂(=CH(o-OCH(Me)CO-*N* Pyrrolidin)Ph)(SIPrNap)] |
| 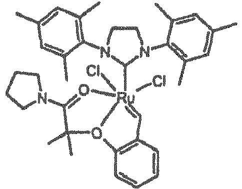 | [RuCl₂(=CH(o-OCMe₂CO-*N-*Pyrrolidin)Ph)(ImH₂Mes)] |
| 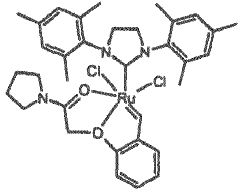 | [RuCl₂(=CH(o-OCH₂CO-*N-*Pyrrolidin)Pl₁)(ImH₂Mes)] |

## Revendications

1. Procédé de préparation de composés de formule I 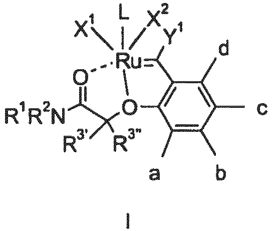 dans laquelle la ligne pointillée signifie l'existence d'une liaison ou l'absence d'une liaison;
L a la signification d'un ligand neutre choisi parmi 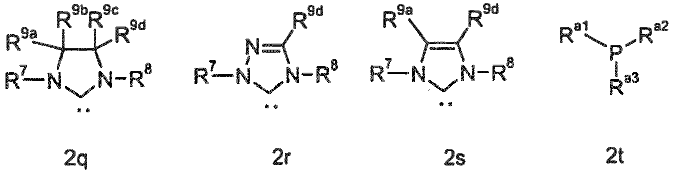 où R⁷ et R⁸ sont, indépendamment l'un de l'autre, un alkyle en C₁-C₆, un aryle, un alcényle en C₂-C₆ ou un 1-adamantyle, et
R^{9a-d} sont, indépendamment les uns des autres, un hydrogène, un alkyle en C₁-C₆, un alcényle en C₂-C₆ ou un aryle, ou R^{9b} et R^{9c} ou R^{9a} et R^{9d}, pris ensemble, forment un pont -(CH₂)₄ ;
ou R^{9a} et R^{9d}, dans la formule 2s, ont tous les deux la signification d'un halogène; R^{a1}, R^{a2} et R^{a3}, indépendamment les uns des autres, représentent un alkyle en C₁-C₆, un cycloalkyle en C₃-C₈, un aryle, un hétéroaryle, ou R^{a1} et R^{a2}, ou R^{a2} et R^{a3}, ou R^{a1} et R^{a3}, pris ensemble, forment un groupe cyclooctyle ponté en 1,5 ;
X¹ et X², indépendamment l'un de l'autre, sont des ligands anioniques ;
Y¹ est un hydrogène, un alkyle en C₁-C₆, un cycloalkyle en C₃-C₈, un alcényle en C₂-C₆, un alcynyle en C₂-C₆, un alcoxy en C₁-C₆, un alcényloxy en C₂-C₆, un alcynyloxy en C₂-C₆, un aryloxy, un (alcoxy en C₁-C₆)-carbonyle, un alkylthio en C₁-C₆, un aryle, un arylthio, un alkylsulfonyle en C₁-C₆, un alkylsulfinyle en C₁-C_{6;}
a, b, c et d, indépendamment les uns des autres, ont la signification d'hydrogène, alkyle en C₁-C₆, halogénoalkyle en C₁-C₆, alcényle en C₂-C₆, alcynyle en C₂-C₆, alcoxy en C₁-C₆, alcényloxy en C₂-C₆, alcynyloxy en C₂-C₆, (alkyl en C₁-C₆)-carbonyle, aryle, hydroxy, aryloxy, nitro, (alcoxy en C₁-C₆)-carbonyle, amino, mono-(alkyl en C₁-C₆)- ou di(alkyl en C₁-C₆)-amino, halogène, thio, alkylthio en C₁-C₆, arylthio, alkylsulfonyle en C₁-C₆, alkylsulfinyle en C₁-C₆, arylsulfonyle, SO₃H, (alkyl en C₁-C₆)-carbonylamino, arylcarbonylamino, alkylsulfonylamino en C₁-C₆, arylsulfonylamino, halogénoalkylsulfonylamino en C₁-C₆, SO₃-alkyle en C₁-C₆ ou OSi(alkyle en C₁-C₆)₃ et SO₂-NR'R" où R' et R", indépendamment l'un de l'autre, ont la signification d'hydrogène, aryle ou alkyle en C₁-C₆ ou R' et R" forment ensemble, avec l'atome N, un cycle ;
R¹ et R², indépendamment l'un de l'autre, sont un hydrogène, un alkyle en C₁-C₆, un cycloalkyle en C₃-C₈, un aryle, un aryl-(alkyle en C₁-C₆), ou
R¹ et R² forment ensemble, avec l'atome N, un cycle de 5 à 8 chaînons qui peut contenir de l'azote, de l'oxygène ou du soufre comme hétéroatome supplémentaire ;
R^{3'} et R^{3"}, indépendamment l'un de l'autre, sont un hydrogène, un alkyle en C₁-C₆, un cycloalkyle en C₃-C₈, un aryle, un aryl-(alkyle en C₁-C₆),
comprenant la conversion d'un composé précurseur de Ru de formule II 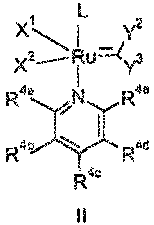 où X¹, X² et L sont tels que définis ci-dessus, et
Y² et Y³, indépendamment l'un de l'autre, sont un hydrogène, un alkyle en C₁-C₆, un alcényle en C₂-C₆, un alcynyle en C₂-C₆, un alkylthio en C₁-C₆, un aryle, un arylthio, un alkylsulfonyle en C₁-C₆, un alkylsulfinyle en C₁-C₆,
ou Y² et Y³, pris ensemble, forment un cycle du type 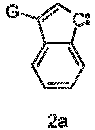 G étant un hydrogène ou un aryle ;
ou Y² et Y³ forment ensemble un groupe cumulényle du type 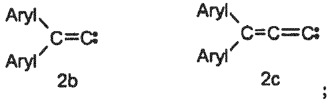 R^{4a}, R^{4b}, R^{4c}, R^{4d}, R^{4e}, indépendamment les uns des autres, sont un hydrogène, un alkyle en C₁-C₆, alkyloxy en C₁-C₆, un aryle, un aryloxy, un halogène, un (alkyl en C₁-C₆)-carbonylamino ou un arylcarbonylamino ;
avec un préligand de formule III 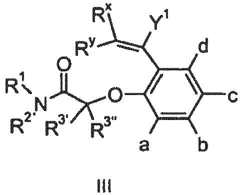 où R¹, R², R^{3'}, R^{3"}, Y¹ et a, b, c, d sont tels que définis ci-dessus ;
R^{x} et R^{y}, indépendamment l'un de l'autre, représentent un hydrogène, un alkyle en C₁-C₆ éventuellement substitué par un ou plusieurs atomes d'halogène ou un aryle éventuellement substitué par un ou plusieurs atomes d'halogène ou par alkyle en C₁-C₆.

2. Procédé selon la revendication 1, **caractérisé en ce que**, dans le précurseur de Ru de formule II, Y² et Y³ sont de préférence pris ensemble pour former un cycle du type 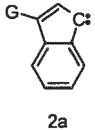 G étant un hydrogène ou un aryle.

3. Procédé selon la revendication 1, **caractérisé en ce que**, dans le précurseur de Ru de formule II, X¹ et X² représentent un halogénure ou un pseudo-halogénure.

4. Procédé selon la revendication 1, **caractérisé en ce que** R^{4a}, R^{4b}, R^{4c}, R^{4a}, R^{4e} représentent un hydrogène, un méthyle ou un atome d'halogène.

5. Procédé selon la revendication 1, **caractérisé en ce que** les préligands de formule III sont choisis parmi

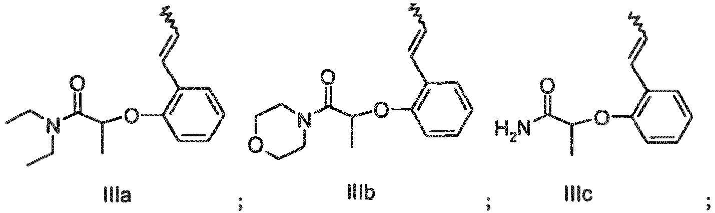

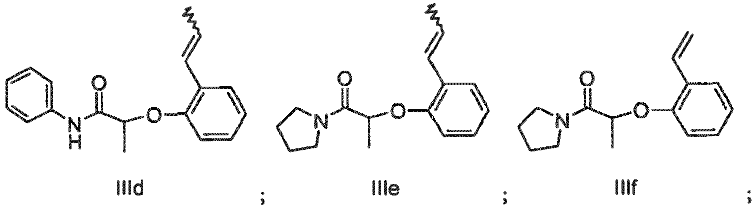

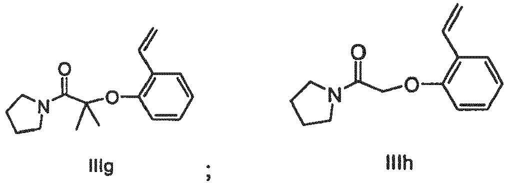

6. Procédé selon les revendications 1 à 5, **caractérisé en ce que** la conversion s'effectue dans un solvant organique inerte à une température de 0°C à 100°C.

7. Procédé selon la revendication 6, **caractérisé en ce que** le solvant organique inerte est un solvant aromatique, un solvant aromatique halogéné, un hydrocarbure halogéné et leurs mélanges, ou un mélange desdits solvants avec un hydrocarbure aliphatique.

8. Procédé selon la revendication 1, **caractérisé en ce que** les composés de formule I sont choisis parmi
| | |
|---|---|
| 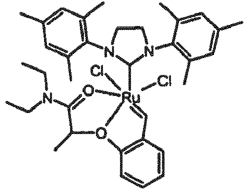 | [RuCl₂(=CH(o-OCH(Me)CONEt₂)Ph)(ImH₂Mes)] |
| 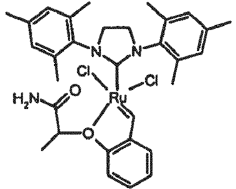 | [RuCl₂(=CH(o-OCH(Me)CONH₂)Ph)(ImH₂Mes)] |
| 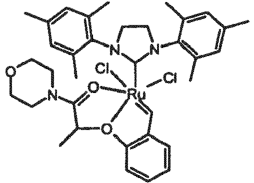 | [RuCl₂(=CH(o-OCH(Me)CO-*N-*Morpholine)Ph)(ImH₂Mes)] |
| 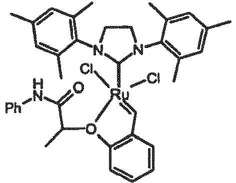 | [RuCl₂(=CH(o-OCH(Me)CONHPh)Ph)(ImH₂Mes)] |
| 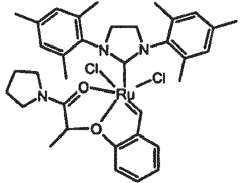 | [RuCl₂(=CH(o-OCH(Me)CO-*N* Pyrrolidine)Ph)(ImH₂Mes)] |
| 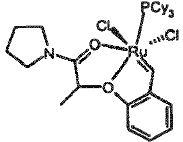 | [RuCl₂(=CH(o-OCH(Me)CO-*N-*Pyrrolidine)Ph)(PCy₃)] |
| 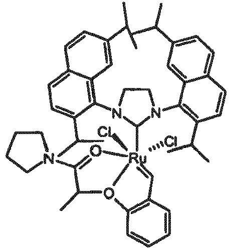 | [RuCl₂(=CH(o-OCH(Me)CO-*N-*Pyrrolidine)Ph)(SIPrNap)] |
| 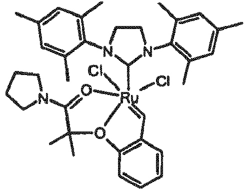 | [RuCl₂(=CH(o-OCMe₂CO-*N-*Pyrrolidine)Ph)(ImH₂Mes)] |
| 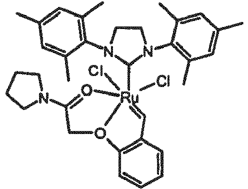 | [RuCl₂(=CH(O-OCH₂CO-*N-*Pyrrolidine)Ph)(ImH₂Mes)] |
